# EUROPÄISCHE PATENTANMELDUNG

(11) **EP 2 329 935 A1**
(43) Veröffentlichungstag der Anmeldung: **08.06.2011**
(21) Anmeldenummer: 09015082.2
(22) Anmeldetag: 04.12.2009
(51) Int. Cl.: B29C 67/00

(54) **Modellierungsvorrichtung**

(71) Anmelder: Battenberg, Günther, 35037 Marburg (DE)
(72) Erfinder: Battenberg, Günther, 35037 Marburg (DE)
(74) Vertreter: Grünecker, Kinkeldey, Stockmair & Schwanhäusser Anwaltssozietät

(57) **Zusammenfassung**

Die vorliegende Erfindung betrifft eine Modellierungsvorrichtung mit einem absenkbaren Substratträger (28) und einer Kammer (24) zur Aufnahme des Substratträgers (28), einer quer zu dem Substratträger (28) beweglichen Abgabeeinrichtung (20) aufweisend ein Fördermodul (44) und eine Abgabedüse (46) zum Ausfördern von Modelliersubstanz auf den Substratträger (28), der eine Bewegungseinrichtung (16) zugeordnet ist und einer Steuerungseinrichtung zur Steuerung der Bewegungseinrichtung (16) und der Abgabeeinrichtung (20). Der vorliegenden Erfindung liegt das Problem zugrunde, eine Modelliervorrichtung der gattungsgemäßen Art anzugeben, die eine hohe Flexibilität hat, sich leicht und zuverlässig herstellen lässt und ein hohes Maß an Freiheitsgraden bei der Modellierung von Bauteilen ermöglicht. Zur Lösung dieser Aufgabe wird mit der vorliegenden Erfindung die gattungsgemäße Modelliervorrichtung dadurch weitergebildet, dass die Bewegungseinrichtung (16) einen Roboterarm (34) umfasst. Des Weiteren umfasst die erfindungsgemäße Vorrichtung eine Kalibriereinrichtung (160) zur Erzeugung von Lageinformation zu der Abgabedüse (46). Ein an der Kalibriereinrichtung (160) vorgesehener Kalibriersignalausgang zur Abgabe von Kalibriersignalen kommuniziert mit der Steuereinrichtung.

## Beschreibung

Die vorliegende Erfindung betrifft eine Modellierungsvorrichtung mit einem absenkbaren Substratträger und einer Kammer zur Aufnahme des Substratträgers, einer quer zu dem Substratträger beweglichen Abgabeeinrichtung aufweisend ein Fördermodul und eine Abgabedüse zum Ausfördern von Modelliersubstanz auf den Substratträger, der eine Bewegungseinrichtung zugeordnet ist, und einer Steuerungseinrichtung zur Steuerung der Bewegungseinrichtung und der Abgabeeinrichtung.

Solche gattungsgemäßen Modellierungsvorrichtungen sind beispielsweise aus der EP 1 204 517 B1 bekannt, die weitere Nachweise zum relevanten Stand der Technik angibt. Bei dem Stand der Technik werden Modelle durch Ausfördern von thermoplastischem Material durch das Fördermodul auf den Substratträger aufgebracht. Die Bewegungseinrichtung erlaubt dabei eine Bewegung des Fördermoduls in X- und Y-Richtung, d.h. in einer Ebene, die sich quer, d. h. parallel zu dem Substratträger erstreckt. Dieser wird beim Aufbauen des Modells abgesenkt, so dass im Ergebnis von dem Fördermodul Schichten auf den Substratträger abgelegt werden, die aufeinander aufbauen. Die Abgabeeinrichtung verbleibt dabei in Z-Richtung ortsfest.

Bei dem zuvor genannten Stand der Technik ist die Abgabeeinrichtung über Seilzüge in einem Rahmen beweglich gehalten. Die Seilzüge sind über zwei Motoren angetrieben, von denen der eine Motor die Beweglichkeit in X-Richtung und der andere Motor die Beweglichkeit in Y-Richtung steuert. Die Kammer ist beim gattungsbildenden Stand der Technik eine beheizte Kammer, die die thermoplastische Modelliersubstanz auf einer Temperatur unterhalb ihres Schmelzpunktes hält, die indes im Hinblick auf eine Verringerung von thermischen Schrumpfungen und damit einhergehenden Rissen des thermoplastischen Bauteils oberhalb der Raumtemperatur liegt. Diese beheizte Kammer ist mit einem verformbaren Wärmeisolator abgedeckt, der die Abgabedüse gegenüber dem Rahmen abdichtet, gleichwohl eine Beweglichkeit der Abgabeeinrichtung innerhalb des Rahmens zulässt. Bei dem vorbekannten Stand der Technik ist der Substratträger über Führungen und einen Spindelantrieb, die sich außerhalb der beheizten Kammer befinden, höhenbeweglich angetrieben. Der Substratträger liegt auf Traversen auf, die beidseitig die Kammer durchragen und beidseitig an die Führungen und die Spindelantriebe angeschlossen sind.

Die bei dem vorbekannten Stand der Technik verwirklichte Bewegungseinrichtung ist relativ aufwendig, störanfällig und verhältnismäßig ungenau, da zwischen den Seilzügen, dem Motor und den Umlenkrollen Schlupf auftreten kann. Aufgrund der Elastizität der Seilzüge ist eine exakte Übertragung der gewünschten Stellbewegung des Motors auf die Bewegung der Abgabeeinrichtung nicht möglich. Darüber hinaus kann der Abgabekopf ausschließlich in der X-Y-Ebene bewegt werden. Eine Höhenanpassung, beispielsweise an eine obere Endlage des Substratträgers ist nicht möglich.

Der verformbare Wärmeisolator ist verschleißanfällig. Des Weiteren verhindert er eine visuelle Beobachtung des Modelliervorgangs.

Schließlich ist die vorbekannte Vorrichtung mit einem beheizten Extruder, der mit der Abgabedüse kommuniziert, lediglich geeignet, thermoplastische Materialien zu verarbeiten.

Der vorliegenden Erfindung liegt das Problem zugrunde, eine Modelliervorrichtung der gattungsgemäßen Art anzugeben, die eine hohe Flexibilität hat, sich leicht und zuverlässig herstellen lässt und ein hohes Maß an Freiheitsgraden bei der Modellierung von Bauteilen ermöglicht.

Zur Lösung dieser Aufgabe wird mit der vorliegenden Erfindung die gattungsgemäße Modelliervorrichtung dadurch weitergebildet, dass die Bewegungseinrichtung einen Roboterarm umfasst. Dieser Roboterarm ist vorzugsweise durch einen mehrarmigen, besonders bevorzugt einen 6-achsigen Knickarmroboter, der an seinem freien Ende die Abgabeeinrichtung trägt, gebildet. Des Weiteren umfasst die erfindungsgemäße Vorrichtung eine Kalibriereinrichtung zur Erzeugung von Lageinformation zu der Abgabedüse. Ein an der Kalibriereinrichtung vorgesehener Kalibriersignalausgang zur Abgabe von Kalibriersignalen kommuniziert mit der Steuerungseinrichtung.

Die Kalibriereinrichtung ermöglicht regelmäßig eine Kalibrierung der Abgabedüse in Z-Richtung. Hierzu umfasst die Kalibriereinrichtung in der Regel zwei in Z-Richtung versetzt zueinander vorgesehene und sich exakt rechtwinklig zu der Z-Achse erstreckende Auflageflächen. Regelmäßig wird nicht die Abgabedüse zur Kalibrierung auf diese Auflageflächen aufgesetzt, sondern ein Messtaster, der ebenfalls an dem freien Ende des Roboterarmes befestigt ist. Dieser Messtaster kann lediglich eine Anlagefläche bereitstellen, die auf der Auflagefläche zur Anlage kommt. Er kann auch einen Tastschalter umfassen, der bei Anlage des Messtasters auf die Auflagefläche ein Signal erzeugt, welches an die Steuerungseinrichtung weitergegeben wird und dort als Hinweis ausgewertet wird, dass der Messtaster seine Endlage erreicht hat. Die Robotersteuerung wird angehalten und der erreichte Positionswert der Robotersteuerung wird in der Steuerungseinrichtung als Kalibrierwert für die Höhenlage der Abgabedüse abgespeichert.

Bevorzugt wird indes die Abgabeeinrichtung unter Zwischenschaltung eines Kraft-Momenten-Sensors an dem Roboterarm befestigt. Dessen Signalausgang kommuniziert mit der Steuerungseinrichtung. Mit diesem Kraft-Momenten-Sensor ist es möglich, Kraft bzw. Momenten-Messungen bei der Bewegung des Roboters mit der an dem Roboterarm vorgesehenen Abgabeeinrichtung durchzuführen, um z. B. deren Gewicht und deren Schwerpunkt zu ermitteln. Bei dieser Kalibrierung werden üblicherweise aufgrund der Steuerungsdaten des Roboters Lageinformationen zu der Abgabeeinrichtung erzeugt. Diese Lageinformationen werden mit dem Messwerten des Kraft-Momenten-Sensors abgeglichen und gegebenenfalls abgeleitet, um aus statischen Kräften und Momenten in einer bestimmten Ausrichtung der Abgabeeinrichtung bzw. dynamischen Kräften und Momenten beim Bewegen derselben auf den Schwerpunkt und die Ausrichtung der Abgabeeinrichtung zu schließen. Die Verwendung des Kraft-Momenten-Sensors bietet darüber hinaus die Möglichkeit, eine Kollision der Abgabeeinrichtung bzw. des Roboterarmes bei Bewegung der Abgabeeinrichtung zu verhindern. Eine Kollision wird in dem Sensor durch erhöhte Kräfte bzw. Momente erfasst. Daraufhin stoppt die Steuerungseinrichtung regelmäßig die Bewegung des Roboterarmes. Auch ist es möglich, in einem haptischen Programmiermode die Roboterbewegung aufgrund von Kräften bzw. Momenten zu steuern, die an dem Kraft-Mess-Sensor erfasst werden. So kann der Benutzer in diesem Mode z. B. die Abgabeeinrichtung greifen und gesteuert über die von dem Kraft-Mess-Sensor erfassten Messwerte, die in der Steuerungseinrichtung Eingang in die Robotersteuerung finden, den Roboterarm manuell "führen". In diesem Mode kann der manuell vorgegebene Weg des Roboterarmes abgespeichert werden. So ist es beispielsweise möglich, manuell und frei von alphanumerischen Eingabeformaten den von der Abgabeeinrichtung beim Ausfördern von Modelliersubstanz abzufahrenden Weg einzuprogrammieren.

Die bei der erfindungsgemäßen Vorrichtung vorgesehene Kalibriereinrichtung ermöglicht in der Regel eine Kalibrierung der Lage der Abgabeeinrichtung, insbesondere der Düsenöffnung der Abgabedüse in ein Koordinatensystem, in welchem die Steuerungseinrichtung den abzufahrenden Weg der Abgabeeinrichtung berechnet und ausgibt. Die Kalibriereinrichtung kann beispielsweise ein Laser-Fadenkreuz umfassen, in welches die Düsenspitze der Abgabedüse eingebracht wird. Bei bekannter Lage des Laser-Fadenkreuzes und bei einer Anordnung der Düsenspitze im Mittelpunkt des Fadenkreuzes, derart, dass beide Laserstrahlen auf die Düsenspitze auftreffen, wird aus den Steuerungsdaten des Roboters Lageinformation zu der Lage der Düsenspitze gewonnen. Das Laser-Fadenkreuz kann beispielsweise in Kombination mit einer optischen Kamera vorgesehen sein, die nach einer Grobzentrierung der Düsenspitze über das Laser-Fadenkreuz eine exakte Zentrier-Kalibrierung durch Vermessen der Lage der Düsenöffnung erlaubt. Dabei kann die Abgabeeinrichtung zwischen dem Laser-Fadenkreuz und der Kalibrierkamera verfahren werden.

Mit der Kalibriereinrichtung ist es möglich, die Lage der Düsenspitze in dem für die Steuerungseinrichtung für die Roboterbewegung relevanten Koordinatensystem zu kalibrieren. Aufgrund der Steuerungsdaten des Roboters kann nach dieser Kalibrierung eine exakte Position der Düsenspitze im X-, Y- und Z-Koordinatensystem allein durch die Bewegung des Roboters und gesteuert durch die Roboterbewegung angefahren werden.

Die erfindungsgemäße Weiterbildung ermöglicht eine hohe Flexibilität, da die Abgabeeinrichtung über den Roboterarm in weiten Grenzen und über den Roboterarm rasch beweglich ist. Die Kalibrierung ermöglicht dabei eine exakte Zuordnung der tatsächlichen Lage der Abgabeeinrichtung in einem absoluten Koordinatensystem, so dass durch die Robotersteuerung die Abgabedüse mit hoher Genauigkeit an die gewünschte Stelle innerhalb der Modelliervorrichtung verbracht werden kann. Der Roboterarm kann darüber hinaus mit hoher Genauigkeit die Abgabedüse beim Ausfördern von Modelliersubstanz relativ zu dem Substratträger bewegen.

Im Hinblick auf einen möglichst variablen Einsatz der Modelliervorrichtung und einer Anpassung an unterschiedliche Modelliersubstanzen wird gemäß einer bevorzugten Weiterbildung der vorliegenden Erfindung vorgeschlagen, die Abgabedüse thermisch von dem Fördermodul getrennt auszubilden. Dies bedeutet, dass eine Wärmeleitung zwischen dem Fördermodul und der Abgabedüse in Förderrichtung der Modelliersubstanz weitestgehend vermieden wird. Die thermische Trennung umfasst regelmäßig thermische Isoliermaterialien, die zwischen dem Fördermodul und der Abgabedüse vorgesehen sind und ein Teilstück eines Förderweges innerhalb des Fördermoduls und der Abgabedüse ausformen.

Hierzu ist vorzugsweise zwischen dem Fördermodul und der Abgabedüse ein Keramikrohr vorgesehen, das über einen fördermodulseitigen Befestigungsflansch, der zwischen einem Kühlkörper und dem Fördermodul vorgesehen ist, an dem Fördermodul angeschlossen ist. Bei dieser bevorzugten Ausgestaltung ist das Fördermodul vorzugsweise unbeheizt und die Abgabedüse beheizt. Wärmeleitung zwischen der warmen Abgabedüse und dem üblicherweise auf Raumtemperatur gehaltenen Fördermodul wird durch das Keramikrohr bestmöglich verhindert. Darüber hinaus ist die Befestigungsstelle des Keramikrohres an dem Fördermodul, die durch den Befestigungsflansch des Keramikrohres gebildet wird, als Wärmesenke durch einen Kühlkörper ausgebildet. Dieser Kühlkörper ist üblicherweise mit dem Fördermodul verschraubt und hat in der Regel eine Vielzahl von Kühlrippen, die durch Wärmeleitung durch das Keramikrohr in Richtung auf das Fördermodul geleitete Wärme der Abgabedüse an die Umgebung abgeben. Das Fördermodul kann im Hinblick auf eine möglichst effektive thermische Endkopplung zwischen dem Fördermodul und der Abgabedüse von einem Gehäuse umgeben sein, welches ein Gebläse in sich aufnimmt, jedenfalls aber wenigstens eine Kühlluftleitung ausbildet, die Kühlluft zu dem Kühlkörper führt.

Mit den zuvor beschriebenen Maßnahmen zur thermischen Trennung von Abgabedüse und Fördermodul ist es möglich, unterschiedliche Modelliersubstanzen in der erfindungsgemäßen Modelliervorrichtung zu verarbeiten. Während im Stand der Technik lediglich thermoplastische Materialien zum Einsatz kommen, besteht mit der vorliegenden Erfindung auch die Möglichkeit, keramische Schlämme, die beispielsweise thermisch induziert aushärten, zur Herstellung von Modellkörpern auf das Substrat auszufördern. Die erfindungsgemäße Vorrichtung eignet sich grundsätzlich für sämtliche Modelliersubstanzen, die thermisch induziert aushärten. Allerdings ist es dafür zu bevorzugen, auf Seiten des Substratträgers eine möglichst gleichmäßige Temperatur einzustellen.

Im Hinblick darauf wird gemäß einer bevorzugten Weiterbildung der vorliegenden Erfindung eine Strahlungsheizung mit mehreren zugeordneten Temperatursensoren vorgeschlagen. Die Strahlungsheizung umfasst üblicherweise mehrere für sich separat regelbare Heizstrahler, die beispielsweise aufgrund der Messsignale der Temperatursensoren mittels Pulsweitenmodulation (PWM) angesteuert werden, um im Hinblick auf die gewünschte Endtemperatur eine geregelte und vorherbestimmbare Wärmeleistung abzugeben. Die Temperatursensoren sind vorzugweise auf eine Abgabeebene eingemessen, die sich parallel zu dem Substratträger erstreckt und in der die Abgabedüse beim Ausfördern der Modelliersubstanz quer beweglich ist. Die erfindungsgemäße Weiterbildung hat das Ziel, in dieser Abgabeebene eine gewünschte Solltemperatur möglichst exakt einzustellen. Jedem Heizstrahler der Strahlungsheizung ist vorzugsweise ein Lüfter zugeordnet. Durch diesen Lüfter kann entweder von dem Heizstrahler erzeugte Wärme der Abgabeebene zugeführt werden. Der Lüfter und die Luftführung können aber auch derart ausgestaltet sein, dass der Lüfter lediglich ein den Heizstrahler umgebendes Gehäuse kühlt und die erwärmte Luft an einer unkritischen Stelle abführt, mit dem Ziel, die Abgabeebene allein durch Strahlungswärme genau zu temperieren.

Die Kammer ist aber vorzugsweise eine Heizkammer, die regelmäßig umfänglich durch isolierte Wandungen umgeben, jedoch zur Abgabeeinrichtung offen ist. Es hat sich im Hinblick auf eine gleichmäßige Erwärmung des schichtweise aufgebauten Modells in der Kammer als vorteilhaft erwiesen, dem Substratträger eine Heizvorrichtung zuzuordnen. Die Heizvorrichtung ist danach zusammen mit dem Substratträger höhenbeweglich vorgesehen und regelmäßig unterhalb einer den Substratträger bildenden Platte vorgesehen. Dabei soll die in der Heizkammer eingestellte Temperatur nicht nur den Aushärtvorgang bei thermisch induzierter Aushärtung der Modelliersubstanz fördern. Vielmehr soll durch eine relativ hohe Temperatur, die im Bereich der Fördertemperatur der Modelliersubstanz an der Abgabedüse liegt, thermischer Schrumpf und damit Spannungen innerhalb des schichtweise aufgebauten Modellkörpers vermieden werden.

Gemäß einer weiteren bevorzugten Ausgestaltung der vorliegenden Erfindung ist ein Auszug in der Heizkammer vorgesehen, auf den der Substratträger ablegbar ist. Dieser Auszug kann durch eine die Kammer verschließende Klappe nach außen ausgezogen werden und hat vorzugsweise Teleskopführungen. Der Substratträger ist üblicherweise auf eine Hubeinrichtung abgelegt und ist mit dieser in Z-Richtung höhenbeweglich. Die den Substratträger haltenden Elemente der Hubeinrichtung sind indes nicht mit dem Substratträger verbunden, so dass dieser in einer unteren Endposition auf den Auszug abgelegt und danach mit dem Auszug bewegt werden kann. Dies ermöglicht eine einfache Entnahme des Modellbauteils aus der Modelliervorrichtung.

Gemäß einer weiteren bevorzugten Ausgestaltung der vorliegenden Erfindung hat die Modelliervorrichtung eine Reinigungsstation mit wenigstens einem Reinigungsmittel für die Abgabedüse und einem in der Steuerungseinrichtung hinterlegten Reinigungsmodus, in dem die Abgabedüse durch Bewegung des Roboterarmes zu der Reinigungsstation verbracht und an dem wenigstens einem Reinigungsmittel vorbeigeführt wird. Dabei erzeugt der Roboterarm üblicherweise die Relativbewegung zwischen der Abgabedüse und dem Reinigungsmittel. Das Reinigungsmittel kann beispielsweise eine Abziehlippe oder eine Drahtbürste sein, die jeweils ortsfest vorgesehen sind. Das erzielte Reinigungsergebnis kann beispielsweise mit der Kamera der Kalibriervorrichtung überprüft werden. Vorzugsweise erfolgt die Überprüfung automatisch durch bildgebende Verfahren, wobei bei unzureichender Reinigung ein automatisierter Wiederholungsschritt für die Reinigung der Abgabedüse zwischengeschaltet wird. Erst nach erfolgreicher Reinigung der Abgabedüse wird die Abgabeeinrichtung in die Ausgangsposition zum Ausfördern von Modelliersubstanz auf den Substratträger verbracht.

Üblicherweise sind die Reinigungsstation sowie eine gesonderte und die Kalibriermittel enthaltende Kalibrierstation unmittelbar benachbart zu dem Substratträger, jedoch ortsfest vorgesehen.

Mit Rücksicht auf eine denkbare Zuförderung von strangförmigem Modellierausgangsmaterial wird gemäß einer bevorzugten Weiterbildung der vorliegenden Erfindung eine Vorratsspule vorgeschlagen, die drehbar an dem Roboterarm gelagert ist. Dieser trägt des Weiteren eine Fördereinrichtung mit Förderrollen, die derart vorgesehen sind, dass sie das strangförmige Modellierausgangsmaterial klemmen und fördern können. Zumindest eine der Förderrollen ist dabei angetrieben. Das Modellierausgangsmaterial wird danach im festen Zustand der Abgabeeinrichtung zugeführt und kann dort zerkleinert und/oder aufgeschmolzen werden.

Alternativ oder ergänzend umfasst die Vorrichtung einen Vorratszylinder mit zugeordnetem Druckkolben, durch dessen Druckbeaufschlagung fließfähige Modelliersubstanz in Richtung auf die Abgabedüse gefördert wird. Zusätzlich oder alternativ kann die Abgabeeinrichtung eine Förderschnecke nach Art eines Extruders umfassen. Dieser Extruder kann Temperiermittel zum Kühlen oder Wärmen der zugeführten Modelliersubstanz aufweisen.

Gemäß einer weiteren bevorzugten Ausgestaltung der vorliegenden Erfindung trägt der Roboterarm zwei nebeneinander vorgesehene Abgabeeinrichtungen. Diese Weiterbildung bietet die Möglichkeit, neben der eigentlichen Modelliersubstanz ein Stützmaterial benachbart zu der Modelliersubstanz auf den Substratträger auszufördern, welches bis zur endgültigen Aushärtung und/oder Konsolidierung des dreidimensionalen Modells das noch schwache Gerüst der Modelliersubstanz stützt. Die Notwendigkeit für eine weitere Abgabeeinrichtung zur Abgabe von Stützmaterial besteht insbesondere bei keramischen Modellen bzw. Modellen aus keramischen Verbundstoffen. Die weitere Abgabeeinrichtung kann aber auch genutzt werden, um zwei unterschiedliche Substanzen unmittelbar nebeneinander aufzubringen, die nach dem endgültigen Aushärten bzw. Konsolidieren des Modells nebeneinander Bestand haben. Als Konsolidieren wird dabei insbesondere der Zustand eines Modells verstanden, welches dieses nach einer Verdichtung mittels Sintern zeigt. Konsolidierte Modelle bestehen insbesondere aus keramischen Stoffen, keramischen Verbundstoffen, Refraktärmetallen oder Superlegierungen.

Die Merkmale der abhängigen Ansprüche können auch für sich erfindungswesentlich sein, d. h. mit den oberbegrifflichen Merkmalen von Anspruch 1 einen Gegenstand der Erfindung angeben.

Die vorliegende Erfindung wird nachfolgend anhand von Ausführungsbeispielen in Verbindung mit der Zeichnung näher erläutert. In dieser zeigen:
- Figur 1: eine perspektivische Seitenansicht des Ausführungsbeispiels;
- Figur 2: eine perspektivische Seitenansicht des freien Endes des in Figur 1 dargestell- ten Roboterarmes;
- Figur 3: eine perspektivische Ansicht einer Kammer zur Aufnahme des Substratträgers bei geöffneter Klappe;
- Figur 4: eine in der Kammer gemäß Figur 3 vorgesehene Hubeinrichtung;
- Figur 5: eine der in Figur 2 gezeigten Abgabeeinrichtungen in vergrößerter Darstel- lung;
- Figur 6: die in Figur 5 gezeigte Abgabeeinrichtung mit Verkleidung;
- Figur 7: das vordere Ende A der in Figur 5 gezeigten Abgabeeinrichtung;
- Figur 8: eine Längsschnittansicht der Darstellung gemäß Figur 7;
- Figur 9: ein alternatives Ausführungsbeispiel eines Roboters;
- Figur 10: eine Kalibrierstation für das gezeigte Ausführungsbeispiel; und
- Figur 11: eine Reinigungsstation für das gezeigte Ausführungsbeispiel.

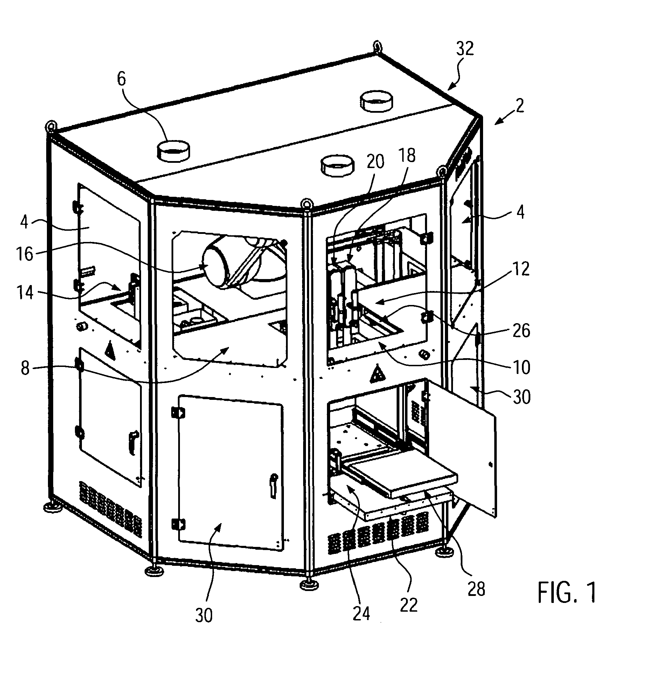

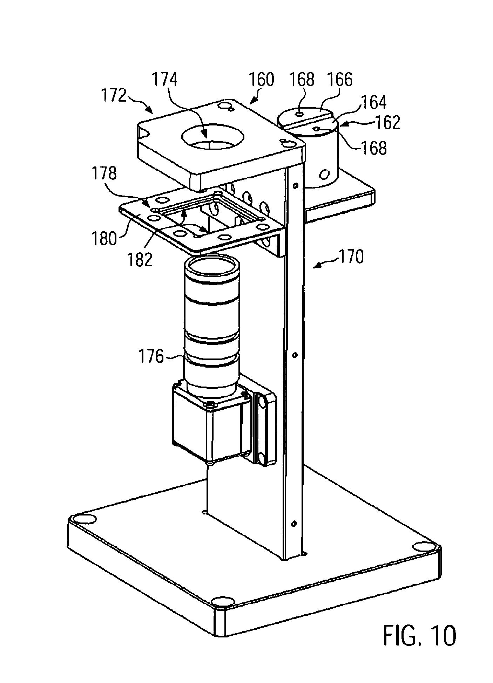

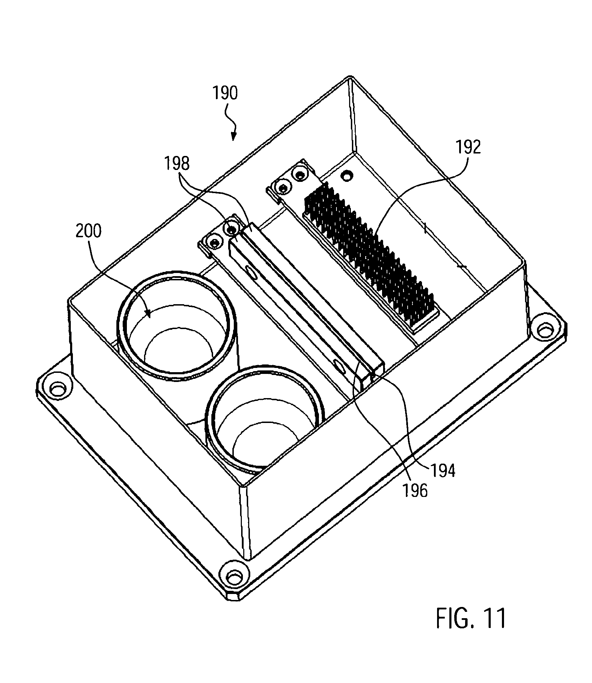

Die Figur 1 zeigt eine perspektivische Ansicht eines Ausführungsbeispiels mit einem Gehäuse 2, dessen Innenraum über mehrere Sichtfenster 4 einsehbar ist. Auf dem Dach des Gehäuses 2 befindet sich eine Auslassöffnung 6 für eine nicht weiter dargestellte Absaugung aus dem Gehäuse 2. Etwa auf Höhe des unteren Randes der Sichtfenster 4 befindet sich eine Abdeckplatte 8, die drei Funktionsfelder ausspart, wobei mittig vorne ein Produktionsplatz 10 vorgesehen ist, rechts außen ein Kalibrierplatz 12 mit Wechselvorrichtungen für Dosierköpfe und links außen ein Reinigungs- und Kalibrierplatz 14. Die Plätze 12 und 14 sind bei dem gezeigten Ausführungsbeispiel zur Vereinfachung der Darstellung nicht bestückt. Die in Platz 14 eingebauten Reinigungs- bzw. Kalibrierstationen sind in den Figuren 10 und 11 verdeutlicht, die nachfolgend vorgestellt werden. Zwischen dem Platz für Wechselvorrichtungen 12 und dem Reinigungs- bzw. Kalibrierplatz 14 befindet sich ein 6-Achsen-Knickarmroboter 16, der zwei nebeneinander vorgesehene Abgabeeinrichtungen 18, 20 trägt. Mittig und unterhalb der Abdeckplatte 8 ist eine Klappe 22 vorgesehen, die im geschlossenen Zustand eine Kammer 24 mit einer zu dem Produktionsplatz freien Öffnung 26 abdeckt und die Möglichkeit eröffnet, einen in der Kammer 24 üblicherweise vorgesehenen Substratträger 28 aus dem Gehäuse 2 herauszuziehen und an der Außenseite zugänglich zu machen. Beidseitig der Kammer 24 sind Türen 30 vorgesehen, über welche jeweils innerhalb des Gehäuses 2 vorgesehene Stau- bzw. Revisionsplätze zugänglich sind. Eine weitere seitliche Tür 32 ermöglicht den Zugang zu dem Roboter 16.

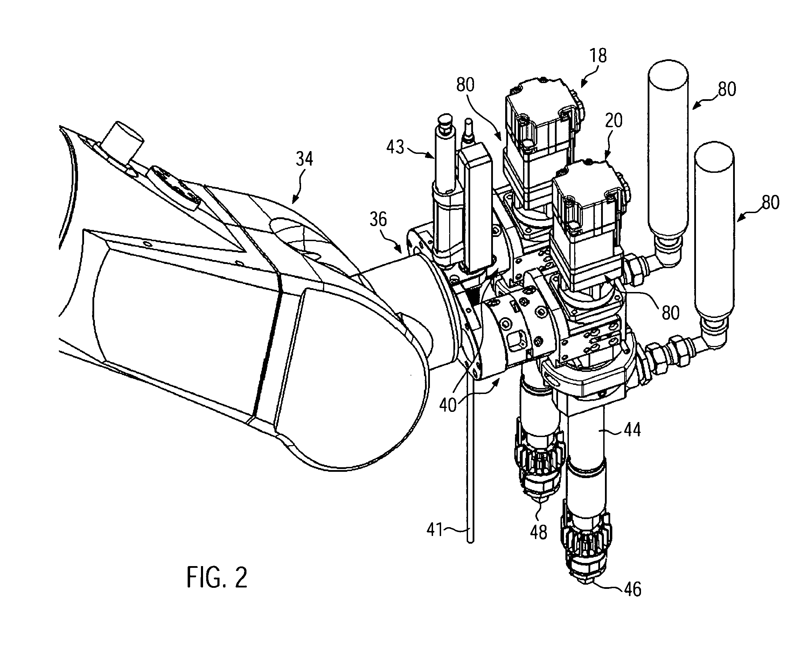

In Figur 2 ist ein Endstück eines Arms 34 des Roboters 16 in perspektivischer Darstellung gezeigt. Unter Zwischenschaltung eines Kraft-Momenten-Sensors 36 und eines zur Halterung der beiden Abgabeeinrichtungen 18, 20 angepassten Kupplungssystems 40 sind die beiden Abgabeeinrichtungen 18, 20 an dem Roboterarm 34 befestigt. Das Kupplungssystem 40 trägt des Weiteren einen sich im Wesentlichen parallel zu den Abgabeeinrichtungen 18, 20 erstreckenden, unterhalb des Kupplungssystems 40 vorgesehenen Kalibrierstab 41, der in seiner Längsrichtung, d.h. in Z-Achse verschieblich an dem Kupplungssystem 40 gehalten ist. Hierzu ist eine mit Bezugszeichen 43 gekennzeichnete Einheit bestehend aus einem druckluftbeaufschlagbaren Kolben vorgesehen, mit dem der Kalibrierstab 41 in eine untere Messposition und von dort in eine obere Ruheposition gefahren werden kann. Der Einheit ist ferner eine Messsensorik zugeordnet, die das Auftreffen des Kalibrierstabes 41 auf einen Widerstand feststellt und ein entsprechendes Signal an die Steuerungseinrichtung weiterleitet. Der Roboter 16 sowie der Kraft-Momenten-Sensor 36 kommunizieren mit einer nicht dargestellten Steuerungseinrichtung, die derart vorbereitet ist, dass aufgrund der Signale des Kraft-Momenten-Sensors 36 eine Bewegungssteuerung des Roboters 16 möglich ist. Die Signale des Kraft-Momenten-Sensors 36 bewirken auch eine Notabschaltung der Robotersteuerung beim Auftreffen des Roboterarms 34 bzw. der Abgabeeinrichtungen 18, 20 gegen ein Hindernis.

Die in Figur 2 gezeigten Abgabeeinrichtungen 18, 20 umfassen jeweils einen Motor 42 zum Antrieb einer Förderschnecke eines mit Bezugszeichen 44 gekennzeichneten Schneckenantriebs. Die mit Bezugszeichen 20 versehene Abgabeeinrichtung weist eine beheizte Abgabedüse 46 auf, die nachfolgend ausführlicher beschrieben werden wird. Bei der Dosiereinheit 18 handelt es sich um eine Dosiereinheit zur Abgabe von thermoplastischem Material, welches innerhalb der Dosiereinheit 18 aufgeschmolzen und über eine unbeheizte Abgabedüse 48 ausgefördert wird.

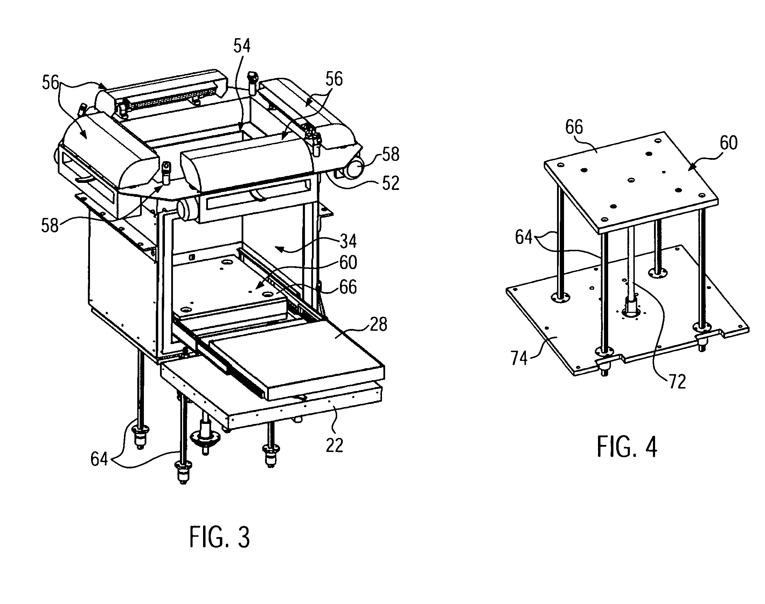

Die Figur 3 zeigt die Kammer 24 umgebende Wandungen 50. Die Heizkammer 24 ist mit einer Abdeckplatte 52 versehen, die eine mittlere, rechteckige Aussparung 54 hat und vier orthogonal zueinander vorgesehene Heizstrahler 56 mit zugeordneten Lüftern trägt. In den Eckbereichen der Abdeckplatte 52 befinden sich Pyrometer 58, die diagonal zu der Aussparung 54 der Abdeckplatte 52 eingemessen sind und die Temperatur in einer Abgabeebene überwachen und deren Messsignale in einer Regelung der Heizstrahler 56 verarbeitet werden. Einem Heizstrahler 56 sind dabei die Signale von zwei benachbart hierzu vorgesehenen Pyrometern 58 zugeordnet. Die Steuerung der durch die Heizstrahler 56 abgegebenen Heizleistung erfolgt mittels Pulsweitenmodulation.

in der Kammer 24 befindet sich ein Hubtisch 60 einer in Figur 4 gezeigten Hubeinrichtung, deren Führungen 64 aus der Kammer 34 herausragen und in Figur 3 dargestellt sind. Auf diesem Hubtisch 60 liegt der Substratträger 28 auf, und zwar vorzugsweise unter Zwischenlage einer Heizplatte 66, die auf Temperaturen bis zu 250°C aufgeheizt werden kann. In der in Figur 3 gezeigten unteren Endposition des Hubtisches 60 liegt der Substratträger 28 auf Teleskopschienen 68 eines Auszuges 70 auf und kann dementsprechend manuell seitlich aus der Kammer 24 herausgezogen werden. In Figur 4 ist im Übrigen eine Spindel 72 zu erkennen, die durch einen unterhalb einer Basisplatte 74 vorgesehenen Antriebsmotor höhenbeweglich ist, der sich außerhalb der Kammer 34 befindet.

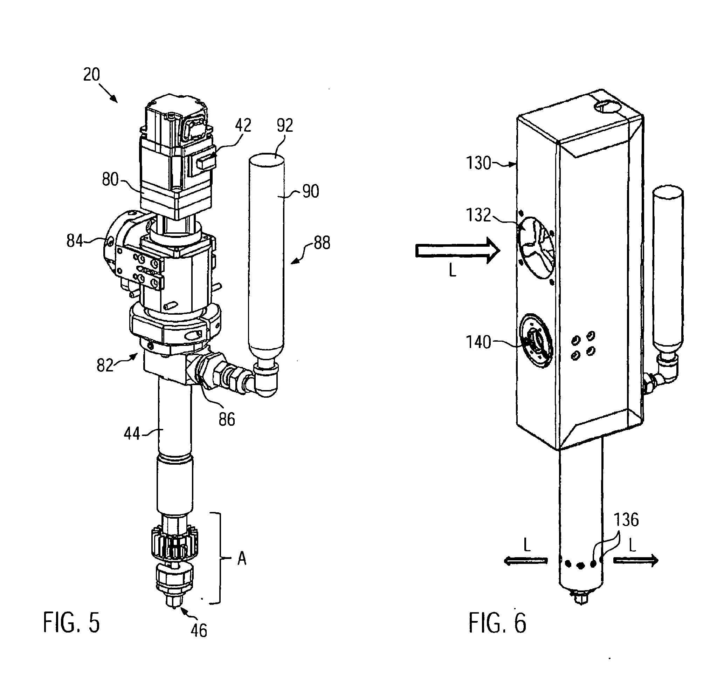

Die Figuren 5 und 6 verdeutlichen die in Figur 2 mit Bezugszeichen 20 bezeichnete Abgabeeinrichtung. Gleiche Bauteile sind mit gleichen Bezugszeichen gekennzeichnet. Zwischen dem Antriebsmotor 42 und dem Schneckenantrieb 44 ist ein Getriebe 80 vorgesehen, welches mit einer Welle des Schneckenantriebs 44 verdrehfest verbunden ist. Die Einheit aus Antriebsmotor 42 und Getriebe 80 ist an ein Abgabeeinrichtungsgehäuse 82 angeflanscht. Von diesem Abgabeeinrichtungsgehäuse 82 ragt ein Werkzeugwechselsystem 84 ab, welches als Bestandteil des in Figur 2 mit Bezugszeichen 40 gekennzeichneten Kupplungssystems ausgebildet ist und eine leichte Verbindung zwischen der Abgabeeinrichtung 20 und dem Roboterarm 34 ermöglicht.

Im Einzugsbereich des Schneckenantriebs 44 ist ein Materialeingang 86 vorgesehen, der mit einem Kartuschenvorrat 88 kommuniziert. Der Kartuschenvorrat 88 hat ein zylinderförmiges Gehäuse 90, in dem ein Kolben längsverschieblich gelagert ist. Auf der dem Materialeingang 86 abgewandten Seite des Kolbens ist an dem Gehäuse 90 ein Druckluftanschluss 92 ausgeformt, mit dem der Kolben in Figur 5 nach unten gedrängt werden kann. Damit kann flüssige Modelliersubstanz in den Einzug des Schneckenantriebs 44 gefördert werden.

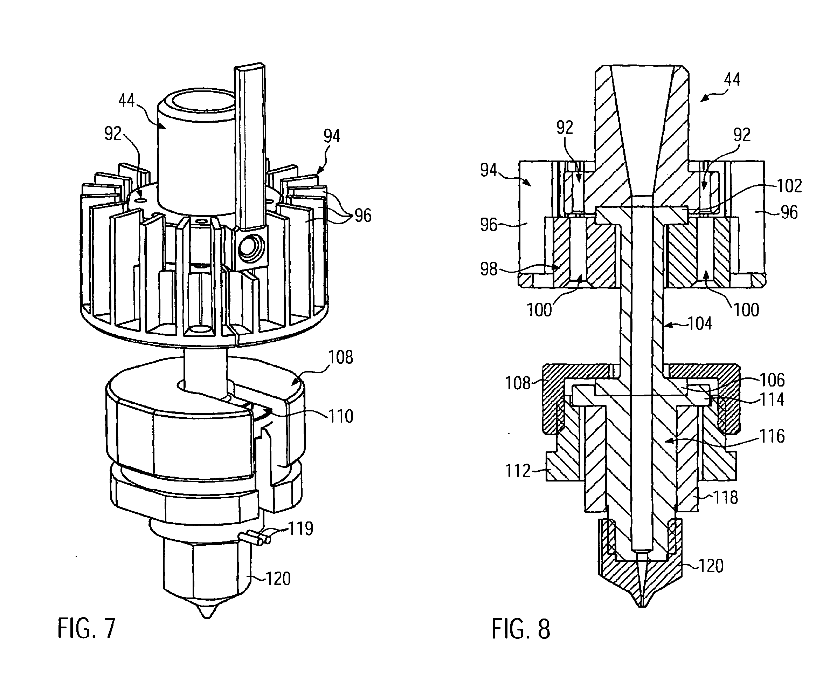

Der Schneckenantrieb 44 ist unbeheizt. Zwischen dem Schneckenantrieb 44 und der Abgabedüse 46 befindet sich ein keramisches Rohrstück, welches in den Figuren 7 und 8 verdeutlicht ist.

Das in den Figuren 7 und 8 gezeigte Ausführungsbeispiel des vorderen Endes A der Abgabeeinrichtung 20 eignet sich besonders zur Abgabe von keramischer Modelliersubstanz zur Herstellung von keramischen Modellen aus keramischen Verbundstoffen. In den Figuren 7 und 8 ist mit Bezugszeichen 44 das vordere Ende des Schneckenantriebs gekennzeichnet. Dieses umfasst einen Ringflansch 90 mit einer Vielzahl auf dem Umfang verteilt vorgesehenen Durchgangsbohrungen 92, die mit einem Innengewinde versehen sein können. Unterhalb des Ringflansches 90 befindet sich ein Kühlkörper 94 mit einer Vielzahl von Kühlrippen 96, die auf dem Umfang des Kühlkörpers 94 verteilt vorgesehen sind. Der Kühlkörper 94 hat eine ringförmige Kühlkörperbasis 98, die korrespondierend zu den Durchgangsbohrungen 92 mit Bohrungen 100 versehen ist. Zwischen dem vorderen Ende des Schneckenantriebs 44 und dem Kühlkörper 94 ist ein Flansch 102 eines Keramikrohres 104 vorgesehen und durch die Bohrungen 100 und 92 durchsetzende Befestigungsschrauben geklemmt.

Auch auf der gegenüberliegenden Seite hat das Keramikrohr 104 einen Befestigungsflansch 106. Dieser wird oberseitig von einer Überwurfmutter 108 begrenzt, die mit einem Einführschlitz 110 versehen ist. Die Überwurfmutter 108 kooperiert mit einer Überwurfbasis 112, die sich gegen einen oberen Befestigungsflansch 114 eines Düsenkerns 116 abstützt und diesen sowie den Flansch 106 des Keramikrohres 104 bei mit der Überwurfbasis 112 verschraubter Überwurfmutter 108 einklemmt. Zwischen dem Düsenkern 116 und einem Düsenmantel 118 befindet sich eine nicht detaillierte Widerstandsheizung zum Beheizen der Düse, deren elektrische Anschlusskabel in Figur 7 mit Bezugszeichen 119 angedeutet sind. Am vorderen Ende des Düsenkerns 116 ist eine Düsenspitze 120 angeschraubt. Es besteht die Möglichkeit, verschiedene Düsengeometrien durch verschiedene Düsenspitzen 120 zu realisieren.

Während die in Figur 8 gezeigte Abgabedüse 46 beheizt ist soll die in dem Schneckenantrieb 44 geförderte Modelliersubstanz auf Raumtemperatur gehalten werden. Hierzu ist in einem in Figur 6 gezeigten Dosiergehäuse 130, welches den Schneckenantrieb 44 bis zu dem Antriebsmotor 42 umgibt, eine Luftansaugöffnung 132 ausgespart, in der ein Lüfter 134 angeordnet ist. Die Luftansaugöffnung 132 kommuniziert mit Luftaustrittsöffnungen 136 am unteren Ende des Dosiergehäuses 130. Diese Luftaustrittsöffnungen 136 sind auf dem Umfang des Dosiergehäuses 130 vorgesehen, und zwar in etwa auf Höhe der Kühlrippen 96 des Kühlkörpers 94. An dem Dosiergehäuse 130 befindet sich des Weiteren ein Anschlussflansch 140 mit Ein- und Auslassöffnungen für ein temperiertes Fluid, welches durch einen optional in dem Dosiergehäuse 130 angeordneten Wärmetauscher hindurchgeleitet wird, der von der in die Luftansaugöffnung 132 angesaugten Luft L angeströmt wird. Mit dieser konkreten Ausgestaltung kann am düsennahen Ende des Schneckenförderers 44 die Temperatur der Modelliersubstanz in weiten Bereichen angepasst werden.

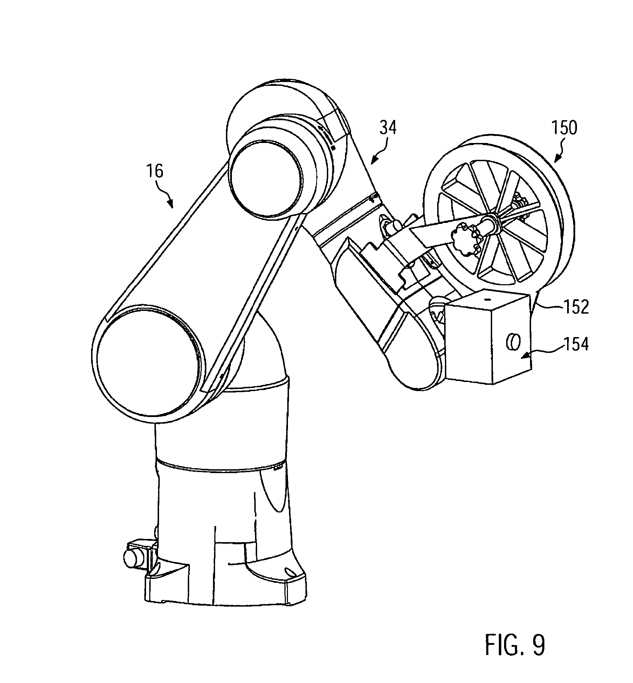

Die Figur 9 zeigt ein Ausführungsbeispiel des Roboters 16, der an seinem Roboterarm 34 eine Vorratsspule 150 trägt, die frei drehbar gelagert ist und auf der strangförmiges Modellierausgangsmaterial 152 aufgewickelt ist. Dieses Modellierausgangsmaterial 152 wird einer Fördereinrichtung 154 zugeführt, die mit das Modellierausgangsmaterial 152 klemmenden Förderrollen versehen ist. Damit kann in fester Form vorliegendes Modellierausgangsmaterial 152 der Abgabedüse 46 zugeführt werden.

Die Figur 10 verdeutlicht eine Kalibrierstation 160. Diese Kalibrierstation hat zum Einen ein Stufenkalibrierelement 162, das zur Kalibrierung der Z-Achse zwei in Z-Richtung versetzt vorgesehene Kalibrierstufen 164, 166 umfasst, die sich in der X-Y-Ebene erstrecken. Auf den jeweiligen Kalibrierstufen 164, 166 befinden sich Kalibriermarkierungen 168. Auf der dem Stufenkalibrierelement 162 in Bezug auf einen Stützträger 170 gegenüberliegenden Seite befindet sich ein Laserkalibrierelement 172, welches zwei rechtwinklig zueinander abstrahlende Laserquellen und diesen jeweils auf der gegenüberliegenden Seite einer Ausnehmung 174 zugeordnete Fotozellen umfasst. Unterhalb des Laserkalibrierelementes 172 befindet sich eine Kamera 176, deren Videoausgänge mit der Steuerungsvorrichtung verbunden sind. Zwischen der Kamera 176 und der Laserkalibriereinrichtung 172 ist eine Schutzeinrichtung 178 in Form eines Rahmens 180 mit einer Auflage 182 für eine transparente Abdeckplatte vorgesehen.

Zur Kalibrierung fährt der Roboterarm 34 den Kalibrierstab 41 auf die jeweiligen Kalibrierstufen 164, 166, und zwar genau auf die Kalibriermarkierungen 168. Das Anfahren dieser Positionen zur Kalibrierung kann auch haptisch gesteuert erfolgen, indem beispielsweise der Sensor 36 eine von der Hand des Benutzers auf das Kupplungssystem 40 aufgebrachte Kraft erfasst und zur Steuerung der Roboterbewegung über den Kraft-Momenten-Sensor 36 an die Steuerungseinrichtung abgegeben wird. In diesem Mode kann der Benutzer das Auftreffen der Spitze des Kalibrierstabs 41 auf die jeweiligen Kalibriermarkierungen 168 quittieren. Mit dem gezeigten Ausführungsbeispiel kann die Kalibrierung automatisch erfolgen, da die der Einheit 43 für den Kalibrierstab 41 zugeordnete Messsensorik das Aufsetzen der Spitze des Kalibrierstabes 41 die jeweiligen Kalibrierstufen 64, 66 erfasst. Des Weiteren können auch die Kalibriermarkierungen 168 mit einem Punktsensor versehen sein, dessen Sensorsignal in der Steuerungseinrichtung verarbeitet wird, um das Auftreffen der Spitze des Kalibrierstabes 41 anzuzeigen. Die dabei geltenden Ortskoordinaten des Roboterarms 34 werden abgespeichert und zur Berechnung der Kalibrierposition weiterverarbeitet.

Zur genaueren Kalibrierung der Lage, insbesondere der exakten Lage der Abgabedüse 46 wird diese in die Ausnehmung 174 eingefahren und innerhalb der Ausnehmung in X-Y-Z-Richtung bewegt, bis die beiden Laserstrahlen auf das vordere Ende der Abgabedüse 46 auftreffen, d. h. die Fotozellen durch die Abgabedüse 46 abgeschattet sind. Nach dieser optischen Kalibrierung kann eine Feinkalibrierung über die Kamera 176 erfolgen, die von unten die Öffnung der Abgabedüse 46 sieht und über Bild verarbeitende Routinen, die innerhalb der Steuerungseinrichtung ablaufen, die Abgabedüse mit ihrer Öffnung, ggf. mit ihrer Düsengeometrie, für die Herstellung einmisst. Die Schutzeinrichtung 178 verhindert dabei, dass eventuell aus der Abgabedüse 48 austretende Suspension unmittelbar auf die Kameralinse fällt.

Die Figur 11 zeigt schließlich ein Ausführungsbeispiel einer Reinigungsstation 190 mit einem Bürstenelement 192, welches beispielsweise als Drahtbürstenelement ausgebildet ist und eine Vielzahl von rechtwinklig von dem Boden der Reinigungsstation 190 abstehende Borstenbündeln aus Drahtlitzen umfasst. Neben dem Bürstenelement 192 befindet sich ein Abstreifelement 194 mit einer Abstreiflippe 196, die zwischen zwei Blöcken 198 eingespannt ist. Die Reinigungsstation 190 umfasst des Weiteren zwei oben offene Behälter 200 mit Reinigungsflüssigkeit.

Die Steuerungseinrichtung hat üblicherweise einen Reinigungsmode, in dem der Roboterarm 34 die Abgabeeinrichtungen 18, 20 zu der Reinigungsstation 190 verbringt. Dort werden die Abgabedüsen 46 bzw. 48 nach Bedarf gereinigt. Abhängig von dem Grad der Verschmutzung können unterschiedliche Reinigungsprogramme durchlaufen werden. Der Grad der Verschmutzung kann auch zuvor über die Kamera 176 automatisiert erkannt und ein darauf angepasstes und in der Steuerungseinrichtung hinterlegtes Reinigungsprogramm mit den Bilddaten automatisiert ausgewählt und abgefahren werden. Durch die Bewegung des Roboterarms 34 kann die Düsenöffnung der Abgabedüse 46, 48 über die Bürsten des Bürstenelementes 192 gereinigt werden. Auch kann ein Tropfen, der sich an der Düsenöffnung gebildet hat, durch das Abstreifelement 194 entfernt werden. Durch Eintauchen in die Behälter kann beispielsweise Reinigungsflüssigkeit in die Abgabeeinrichtung 18 bzw. 20 eingezogen werden. Hierzu wirkt der Reinigungsmode auf die Motoren 42 der entsprechenden Abgabeeinrichtungen 18, 20 ein. In dem Reinigungsmode können die beiden Abgabeeinrichtungen 18, 20 automatisiert durchspült und vollständig entleert werden. Die Entleerung kann in einen der Behälter 200 erfolgen.

### Bezugszeichenliste

- 2: Gehäuse
- 4: Sichtfenster
- 6: Auslassöffnung (Absaugung)
- 8: Abdeckplatte
- 10: Produktionsplatz
- 12: Platz für Wechselvorrichtungen für Dosierköpfe
- 14: Reinigungs- und Kalibrierplatz
- 16: Roboter
- 18: Abgabeeinrichtung
- 20: Abgabeeinrichtung
- 22: Klappe
- 24: Kammer
- 26: Öffnung
- 28: Substratträger
- 30: Tür
- 32: Zugang
- 34: Roboterarm
- 36: Kraft-Momenten-Sensor
- 40: Kupplungssystem
- 41: Kalibrierstab
- 42: Motor
- 43: Hub- und Sensoreinheit für den Kalibrierstab
- 44: Schneckenantrieb
- 46: Abgabedüse
- 48: Abgabedüse
- 50: Wandung
- 52: Abdeckplatte
- 54: Ausnehmung
- 56: Heizstrahler
- 58: Pyrometer
- 60: Hubtisch
- 62: Hubeinrichtung
- 64: Vertikalführungen
- 66: Heizplatte
- 68: Teleskopschiene
- 70: Auszug
- 72: Spindel
- 74: Basisplatte
- 80: Getriebe
- 82: Abgabeeinrichtungsgehäuse
- 84: Werkzeugwechselsystem
- 86: Materialeingang
- 88: Kartuschenvorrat
- 90: Zylindrisches Gehäuse
- 92: Durchgangsbohrung
- 94: Kühlkörper
- 96: Kühlrippen
- 98: Kühlkörperbasis
- 100: Bohrung
- 102: Flansch
- 104: Keramikrohr
- 106: Flansch
- 108: Überwurfmutter
- 110: Einführschlitz
- 112: Überwurfbasis
- 114: Befestigungsflansch
- 116: Düsenkern
- 118: Düsenmantel
- 119: Elektrisches Anschlusskabel
- 120: Düsenspitze
- 130: Dosiergehäuse
- 132: Luftansaugöffnung
- 134: Lüfter
- 136: Luftaustrittsöffnung
- 140: Anschlussflansch
- 150: Vorratsspule
- 152: Strangförmiges Modellierausgangsmaterial
- 154: Fördereinrichtung
- 160: Kalibrierstation
- 162: Stufenkalibrierelement
- 164: Kalibrierstufe
- 166: Kalibrierstufe
- 168: Kalibriermarkierung
- 170: Stützträger
- 172: Laserkalibrierelement
- 174: Ausnehmung
- 176: Kamera
- 178: Schutzeinrichtung
- 180: Rahmen
- 182: Auflage
- 190: Reinigungsstation
- 192: Bürstenelement
- 194: Abstreifelement
- 196: Abstreiflippe
- 198: Block
- 200: Behälter
- A: Vorderes Ende
- L: Luft

## Patentansprüche

1. Modellierungsvorrichtung mit einem absenkbaren Substratträger (28) und einer Kammer (24) zur Aufnahme des Substratträgers (28), einer quer zu dem Substratträger (28) beweglichen Abgabeeinrichtung (20) aufweisend ein Fördermodul (44) und eine Abgabedüse (46) zum Ausfördern von Modelliersubstanz auf den Substratträger (28), der eine Bewegungseinrichtung (16) zugeordnet ist und einer Steuerungseinrichtung zur Steuerung der Bewegungseinrichtung (16) und der Abgabeeinrichtung (20),
**dadurch gekennzeichnet, dass**
die Bewegungseinrichtung einen die Abgabeeinrichtung (20) tragenden Roboterarm (34) umfasst und dass eine Kalibriereinrichtung (160) zur Erzeugung von Lageinformation zu der Abgabedüse (46) vorgesehen ist, deren Kalibriersignalausgang mit der Steuerungseinrichtung kommuniziert.

2. Modellierungsvorrichtung nach Anspruch 1, **dadurch gekennzeichnet, dass** die Abgabeeinrichtung (20) unter Zwischenschaltung eines Kraft-Momenten-Sensors (36) an dem Roboterarm (34) befestigt ist, und dass ein Signalausgang des Kraft-Momenten-Sensors (36) mit der Steuerungseinrichtung kommuniziert.

3. Modellierungsvorrichtung nach Anspruch 1 oder 2, **dadurch gekennzeichnet, dass** die Abgabedüse (46) thermisch von dem Fördermodul (44) getrennt ist.

4. Modellierungsvorrichtung nach Anspruch 3, **dadurch gekennzeichnet, dass** zwischen dem Fördermodul (44) und der Abgabedüse (46) ein Keramikrohr (104) vorgesehen ist, das über einen fördermodulseitigen Befestigungsflansch (102), der zwischen einem Kühlkörper (94) und dem Fördermodul (44) vorgesehen ist, an dem Fördermodul (44) befestigt ist.

5. Modellierungsvorrichtung nach einem der vorherigen Ansprüche, **dadurch gekennzeichnet, dass** das Fördermodul (44) unbeheizt und dass die Abgabedüse (46) beheizt ist.

6. Modellierungsvorrichtung nach einem der vorherigen Ansprüche, **gekennzeichnet durch** eine Strahlungsheizung (56) mit mehreren zugeordneten Temperatursensoren (58), wobei die Temperatursensoren (58) auf eine Abgabeebene eingemessen sind, die sich parallel zu dem Substratträger (28) erstreckt und in der die Abgabedüse (46) beim Ausfördern der Modelliersubstanz querbeweglich ist.

7. Modellierungsvorrichtung nach einem der vorherigen Ansprüche **gekennzeichnet durch** eine dem Substratträger (28) zugeordnete Heizvorrichtung (66)

8. Modellierungsvorrichtung nach einem der vorherigen Ansprüche, **gekennzeichnet durch** eine in der Kammer (24) vorgesehenen Auszug (70), auf den der Substratträger (28) ablegbar ist.

9. Modellierungsvorrichtung nach einem der vorherigen Ansprüche, **gekennzeichnet durch** eine Reinigungsstation (190) mit wenigstens einem Reinigungsmittel für die Abgabedüse (46) und einem in der Steuerungseinrichtung hinterlegten Reinigungsmodus, in dem die Abgabedüse (46) **durch** Bewegung des Roboterarms (34) zu der Reinigungsstation (190) verbracht und an dem wenigstens einen Reinigungsmittel vorbeigeführt wird.

10. Modellierungsvorrichtung nach einem der vorherigen Ansprüche, **gekennzeichnet durch** eine an dem Roboterarm (34) drehbar gelagerte Vorratsspule (150) für strangförmiges Modellierausgangsmaterial (152) und eine Fördereinrichtung (154) mit das strangförmige Modellierausgangsmaterial (152) klemmenden Förderrollen.

11. Modellierungsvorrichtung nach einem der vorherigen Ansprüche, **gekennzeichnet durch** einen Vorratszylinder (90) für Modelliersubstanz mit einem in dem Vorratszylinder (90) vorgesehenen Druckkolben.

12. Modellierungsvorrichtung nach einem der vorherigen Ansprüche, **dadurch gekennzeichnet, dass** der Roboterarm (34) zwei nebeneinander vorgesehene Abgabeeinrichtungen (18, 20) trägt.
